(19) Europäisches Patentamt
European Patent Office
Office européen des brevets

(11) Publication number: 0 188 618 A1

# (12) EUROPEAN PATENT APPLICATION

published in accordance with Art. 158(3) EPC

(21) Application number: 85900212.3

(22) Date of filing: 14.12.84

Data of the international application taken as a basis:

(86) International application number: PCT/KR 84/00009

(87) International publication number: WO 86/00290 (16.01.86 86/2)

(51) Int. Cl.[4]: C 04 B 7/21, C 04 B 22/12, C 04 B 22/14, C 04 B 28/08, C 04 B 28/22

(30) Priority: 27.06.84 KR 843667

(43) Date of publication of application: 30.07.86 Bulletin 86/31

(84) Designated Contracting States: AT BE CH DE FR GB LI LU NL SE

(71) Applicant: EUN, Hee Kwon, 186-28, Jangchoong-dong 2ga, Joong-gu, Seoul 100 (KR)
Applicant: JUNG, Hyung Jin, Apt 519-1306, 27, Jamsildong, Kangdong-gu, Seoul 134 (KR)

(72) Inventor: EUN, Hee Kwon, 186-28, Jangchoong-dong 2ga, Joong-gu, Seoul 100 (KR)
Inventor: JUNG, Hyung Jin, Apt 519-1306, 27, Jamsildong, Kangdong-gu, Seoul 134 (KR)

(74) Representative: Kador & Partner, Corneliusstrasse 15, D-8000 München 5 (DE)

## (54) HIGH-STRENGTH HYDRAULIC CEMENT COMPOSITION.

(57) A general-purpose, high-strength hydraulic cement composition is prepared by compounding a conventional slag gypsum cement with slaked lime, pozzolanic materials, silicofluoride, and aluminium sulfate. This composition serves to overcome the defects conventional slag gypsum cements that (1) they provide only a short-time job allowance due to fast initial solidifying rate, (2) they show only a poor initial hardening strength, and (3) sufficient strength is obtained only in water or under the ground where sufficient water is present.

EP 0 188 618 A1

0188618

# HIGH-STRENGTH HYDRAULIC CEMENT COMPOSITION

## BACKGROUND AND FIELD OF THE INVENTION

This invention relates to a hydraulic cement composition. More particulary, the invention relates to a high-strength hydraulic cement composition prepared by grinding a granulated blast-furnace slag as a main raw material, pozzolanic materials as a sub-main raw material and functianal additives such as slaked lime, aluminous sulfate and metal salts of fluorosilicate, and mixing them, without high-temperature calcinating.

Prior to the present invention, Portland cements were customarily prepared by calcinating a limestone, clay and iron ore at a temperature of 1,500$^{o}$C to make a clinker, and thereafter grinding and mixing the clinker with a gypsum. But, said method involves consumption ofter times of a considerable amount of energy due to the mining, pretreating, calcinating and grinding of the raw materials, and requires large-scaled facilities.

Accordingly, various energy-saving cements such as slag cements have been suggested, which apply a latent-hydraulic properties of the granular slag by-produced from iron works.

In general, such slag cements are classified into two kinds : one is a granular slag(25 - 30wt.%)-Portland cement system, and the other is a granular slag(70 - 85wt.%)-calcium sulfate anhydrate system. The latter case is now standardized as BS 4,248 in England, NBN 132 in Belgium, Norme P.15-313 in France and DIN 4,210 in Germany. Such standardized slag-gypsum system is a supersulfated cement and consists essentially of 80 - 85wt.% of slag, 15 - 20 wt.% of gypsum and 1 - 3wt.% of Portland cement.

The chemical and mineral composition of the slag-gypsum system compared with an ordinary Portland cement are given in Table 1 below.

Table 1

| Mineral composition | Portland cement | slag-gypsum system |
|---|---|---|
| $4CaO.Al_2O_3.Fe.Mn_2O_3$ | 9.12 | - |
| $3CaO.Al_2O_3$ | 12.14 | - |
| $3CaO.SiO_2$ | 60.57 | - |
| $2CaO.SiO_2$ | 10.80 | 0 -12 |
| $CaSO_4$ | 3.57 | 12-17 |
| CaS | - | 2.7 |
| CaO | 0.70 | 0 |
| $2CaO.Al_2O_3.SiO_2$<br>$2CaO.MgO.2SiO_2$ | - | 70-85 |
| **Chemical composition** | **Portland cement** | **slag-gypsum system** |
| $SiO_2$ | 19.7 | 25.3 |
| $Al_2O_3$ | 6.5 | 12.9 |
| $Fe_2O_3$ or FeO | 3.0 | 1.4 |
| $Mn_2O_3$ or MnO | - | 1.5 |
| CaO | 64.9 | 43.3 |
| MgO | 2.9 | 4.6 |
| $SO_3$ | 2.1 | 9.0 |
| S | 0 | 1.2 |
| loss | 0.8 | 0.5 |

As shown in the Table 1, the slag-gypsum system contains major amount of glass component corresponding to the composition of a melilite(a solid solution of $2CaO.Al_2O_3.SiO_2$ and $2CaO.MgO.2SiO_2$) originated from the granular slag which is a main raw material of the system, certain amount of calcium sulfate anhydrate and minor amount of CaS. The system also contains large amount of $SO_3$ component and little amount of CaO component, consists essentially of a solid solution of $C_2AS$ and $C_2MS_2$, and has little content of $C_3A$ and $C_3S$ which are main raw materials of Portland cements. In this invention, the terms, A,C,S and M means $Al_2O_3$, CaO, $SiO_2$ and MgO, respectively.

Generally, the more the amount of $Ca(OH)_2$, namely, free lime, the inferior the chemical-resistance of a hardened-body of the cements because $Ca(OH)_2$ is formed inevitably when $C_3S$ is hydrated.

Moreover, hydration product of $C_3A$, namely, hydrates of the calcium aluminate series, has inferior chemical-resistance, particulary sulfate-resistance, which causes the chemical-resistance, particulary sulfate-resistance of the Portland cements to fall.

Therefore, the Portland cements may not be applied to a place which contains an abundance of salt or saline component and requires chemical-resistance.

But, the above slag-gypsum system may be employed as a special cement which requires mainly a chemical-resistance properties, because the system containing little amount of $C_3A$ and $C_3S$ components has excellent chemical-resistance, particulary salt-resistance properties.

The glass component corresponding to the composition of a melilite which is a main component of the granular slag not undergoes always a hydration reaction immediately after on contacting with water like $C_3S$, $C_3A$ and $C_2S$ components of the Portland cement, but undergoes a hydration reaction only in the presence of a strong alkaline solution though in contact with water. Generally, the rate of the hydration reaction is very slow.

In the above slag-gypsum system, a small quantity of the free lime, which is produced additionally when about 2wt.% of the Portland cement contained in the system is hydrated(particulary, when the $C_3S$ component of the Portland cement is hydrated), acts as a hydration accelerator, namely, alkaline activator.

However, only in the presence of an effective amount of water the alkaline activation of the free lime is generated, because a solubility of the free lime in water is not so high. That is to say, in case that the amount of water is insufficient, it is difficult to effect the alkaline activation of the free lime.

In the initial stage of the hardening reaction of the slag-gypsum system, a large quantity of ettringite crystal($3CaO.Al_2O_3.3CaSO_4.32H_2O$) is formed because large quantity of $SO_3$ component is contained in the system. Such ettringite crystal absorbs large quantity of water as a crystal water. Therefore, in case of water being lack, most of water will take part in forming an ettringite, water required for effecting an alkaline activation of the small quantity of the Portland cement with hydration rate very slow will be lack, and consequently the forming of the cementious matrix by the hydration of melilite will be more difficult.

As described above, if complete hardening reaction by the hydration is not accomplished, most of the resultant hydrates will exist in the state of bukly, porous and acicular ettringite, and consequently bulk state hardened body will be formed because the matrix wrapping and binding the ettringite is not existing. Therefore, $CO_2$ gas in the air attacks the hardened body, and consequently the ettringite will be decomposed later as shown in formula (1).

$$0.377(3CaO.Al_2O_3.3CaSO_4.32H_2O) + 1.13CO_2$$

$$\longrightarrow 1.13\ CaCO_3 + 1.13\ CaSO_4.2H_2O + 0.754\ Al(OH)_3 + 8.29\ H_2O \qquad (1)$$

If the ettringite decomposed as shown in formula (1), the mechanical strength goes down and the deterioration arise.

This phenomenon is called the deterioration by the carbonation.

The exemplary disadvantages appeared in the slag-gypsum system are enumerated as follows :

(1) An initial hardening strength develops very slowly,

(2) Only underwater or underground the strength develops in a normal curing rate, but in the air the strength develops slowly and the curing may not be executed without taking a necessary step to prevent water-dispersion,

(3) When exposured on the air, the surface deteration will arise and the mechanical strength will go down, and

(4) The hydration rate of the $CaO.Al_2O_3.SiO_2.H_2O$, $CaO.SiO_2.H_2O$ and $CaO.Al_2O_3.H_2O$ by the melilite which is a main component of the slag is very slow, but setting rate, particulary initial setting rate is very rapid rather than Portland cements because $CaSO_4.2H_2O$ involving $CaSO_4$ is hydrated and the ettringite is formed very rapidly.

Consequently, the use of the slag-gypsum system is restricted to seawater work, underwater work or underground work, and has limited time for working. That is to say, the slag-gypsum system is not an usual cement unlike the Portland cements.

## OBJECTS AND SUMMARY OF THE INVENTION

It is an object of the invention to provide a novel high-strength hydraulic cement having high initial hardening strength, excellent carbonation-resistance and lengthened initial setting time.

Another object of the present invention is to provide a high-strength hydraulic cement which can be used commonly like Portland cements.

A further object of the present invention is to provide a high-strength hydraulic cement which will solve several disadvantages of the usual slag-gypsum system.

Other objects and further scope of applicability of the present invention will become apparent from the detailed description given hereinafter. It should be understood, however, that the detailed description and specific examples, while indicating prefered embodiments of the invention, are given by way of illustration only, since various changes and modifications within the spirit and scope of the invention will become apparent to those skilled in the art from this detailed description.

This invention relates to a high-strength hydraulic cement composition having high initial hardening strength, excellent carbonation-resistance and lengthened initial setting time, characterized in that comprises 60 - 85 wt. parts of granulated blast-furnace slag, 5.0 - 15 wt. parts of calcium sulfate anhydrate and/or calcium sulfate dihydrate, 6.0 - 12 wt. parts of pozzolanic materials, 2.0 - 10 wt. parts of slaked lime, 1.0 - 6.0 wt. parts of Portland cement or Portland cement clinker, 1.0 - 6.0 wt. parts of metal salts of fluorosilicates and 0.1 - 0.8 wt. parts of aluminous sulfate.

## DETAILED DESCRIPTION OF THE INVENTION

The process for producing the high-strength cement composition of the present invention comprises grinding and mixing together granulated blast-furnace slag, calcium sulfate anhydrate and/or calcium sulfate dihydrate, pozzolanic materials, slaked lime, Portland cement or Portland cement clinker and metal salts of fluorosilicates without carrying out a high-temperature calcinating to produce fine powder having Blaine value of about 2,500 - 4,600cm$^2$/g.

The granulated blast-furnace slag which may be used in the practice of the present invention is that which is by-produced in iron works. As calcium sulfate anhydrate and/or calcium sulfate dihydrate, may be used purified waste-gypsum by-produced in fertilizer plants, if necessary, natural gypsum or chemical gypsum. And also as pozzolanic materials, may be used ash clinker or fly ash from steam generating stations, briquet cinders, coal cinders, or calcined aluminous silicate, white clay or earth.

The detailed description of the hardening reaction mechanism of the cement according to this invention is as follows.

At room temperature and under normal atmospheric pressure, $Al_2O_3.SiO_2$ series(high reactive pozzolanic materials) and $Ca(OH)_2$ produce a gel state cementious matrix-gel state cementious hydrates of $CaO.SiO_2.H_2O$ or $CaO.Al_2O_3.H_2O$ series - as soon as hydration reaction is occured. The resultant cementious matrix prevents the ettringite from decomposing by $CO_2$ gas because the matrix wraps the surface of the acicular ettringite particles crystallized at early stage of the hydration reaction. Furthermore, the $Al_2O_3.SiO_2$ series and $Ca(OH)_2$ make it possible for calcium sulfate anhydrate added in early stage of the hydration reaction to exist in an ettringite state or a solid solution state comprising both the ettringite and the gel state $CaO.Al_2O_3.H_2O$ while the calcium sulfate anhydrate is not hydrated into calcium sulfate dihydrate.

Therefore, the pozzolanic materials and excess amount of $Ca(OH)_2$ prevents the problems such as a false setting by the hydration of $CaSO_4$(Calcium sulfate anhydrate) and a shortening of the early setting time from arising, and gives a carbonating-resistance to the ettringite.

However, the effect which results from the additives comprising pozzolanic materials, $CaSO_4$ and excess amount of lime does not solve the problems, for example, such as an adjustment of hydration rate, a prevention of carbonating and a development of strength. In order to solve the problems, it is preferable that hydrate rapidly a glass phase(gehelenite, $C_2AS$) of the

melilite composition which is slag dust to form a matrix comprising cementious materials of $CaO.SiO_2H_2O$, $CaO.Al_2O_3.H_2O$ and $CaO.Al_2O_3.SiO_2.H_2O$ series. Namely, it is preferable to accelerate an alkaline activation of the slag dust.

But, in practice, the slag dust remains inactive because the hydration reaction by the alkaline activation of the slag dust is not accerelated, and the decomposition between the slag component and the additives, which is called to bleeding phenomenon, is occured though the hydration reaction by the additives is under way.

Therefore, to enhance the alkaline activation and sulfate activation of the slag component, are added about 2.0 - 5.0wt.% of $Ca(OH)_2$, about 0.5wt.% $Na_2SiF_6$ and about 0.2 - 0.8wt.% of aluminous sulfate in addition to about 2.0 - 3.0wt.% of Portland cement.

$Ca(OH)_2$ described above reacts with $CaSO_4$ and pozzolanic material to form ettringite and cementious materials such as $CaO.SiO_2.H_2O$ and $CaO.Al_2O_3.H_2O$, and to form simultaneously strong alkaline solution which acts also as an alkaline activator.
But, if the amount of $Ca(OH)_2$ is more than 5.0wt.%, there is the possibility that the chemical-resistance way deteriorate and efflorescence phenomenon may arise because $Ca(OH)_2$ exists in free lime.

 

$Na_2SiF_6$ itself is very stable in the air, but solved fast in water to develop alkaline property as follows :

$$Na_2SiF_6 + H_2O + Ca(OH)_2 \longrightarrow \underset{\text{(insoluble)}}{\underline{CaSiF_6}} + \underset{\text{(alkaline)}}{\underline{2NaOH}} + H_2O \qquad (2)$$

As shown in the reaction formula (2), insoluble $CaSiF_6$ stable chemically is also precipitated besides developed alkaline property. The precipitated $CaSiF_6$ densifies the structure of the hardened body of the cement according to this invention by existing in colloidal state in the hardened body, and consequently the strength of the hardened body is increased. Accordingly, as the precipitated $CaSiF_6$ prevents the $CO_2$ gas from entering, the characteristics of the alkaline activation and the carbonation-resistance become more effective.

But, an excess amount of $Na_2SiF_6$ causes an efflorescence phenomenon to hardened body of the cement because aqueous salt of alkali is formed. Preferably, the amount of $Na_2SiF_6$ is not more than 0.5wt.% based on the total weight of the cement according to this invention.

On the other hand, in the practice of the present invention both $MgSiF_6$ and $ZnSiF_6$ which not cause an

efflorescence phenomenon to hardened body of the cement may be employed together with $Na_2SiF_6$. The reaction formulas relating to $MgSiF_6$ and $ZnSiF_6$ are as follows :

$$MgSiF_6 + H_2O + Ca(OH)_2 \longrightarrow \underset{(insoluble)}{\underline{CaSiF_6}} + Mg(OH)_2 + H_2O \quad (3)$$

$$Mg(OH)_2 + CO_2 \quad \underset{(insoluble)}{\underline{MgCO_3}} \quad (4)$$

$$ZnSiF_6 + H_2O + Ca(OH)_2 \longrightarrow \underset{(insoluble)}{\underline{CaSiF_6}} + \underset{(insoluble)}{\underline{Zn(OH)_2}} + H_2O \quad (5)$$

Both $MgCO_3$ and $Zn(OH)_2$ produced in the reaction formula (4) and (5) respectively also contribute to a densification of the hardened body structure.

The fluorosilicates which can be employed in the practice of the present invention are selected from the group consisting of sodium fluorosilicate($Na_2SiF_6$), magnesium fluorosilicate($MgSiF_6$) and zine fluorosilicate ($ZnSiF_6$). The mixed salt thereof also employed in this invention.

The combined amount of the fluorosilicates employed can vary from 0.5 to 3.0wt.% based on the weight of the hydraulic cement, and preferably the ratio of $Na_2SiF_6/(MgSiF_6 + ZnSiF_6)$ is from 1 : 1 to 1 : 2(by weight).

The aluminous sulfate employed in this invention reacts with $Ca(OH)_2$ and accelerates the fromation of a Ettringite rapidly. Therefore, over-retardation of setting time due to the addition of a pozzolanic material can be prevented.

The amount of the aluminous sulfate ranges from 0.1 to 0.8 wt.% based on the weight of the hydraulic cement.
An excess of the range causes the over-acceleration of the initial setting time, and lower a concrete-workability.

The other additives which can be employed in this invention are water-receding dispersant for cements such as Melment F 10, and silica sand or silica stone. The prefered amount of the water-receding dispersant, and the silica stone or silica sand are 0.1 - 1.0 wt.%, and 0.1 - 5.0 wt.%, respectively.

As illustrated above, the early strength is developed due to the acceleration of hydration by the alkaline activation, the carbonation-resistance is effected by the addition of pozzolanic materials, excess amount of lime and salts of fluorosilicates, and the adjustment of the setting time and the enhancement of the long-term strength can be achieved due to the balanced hydration reaction of the slag, lime, gypsum and pozzolanic materials by the influence of the additives. The developed hydraulic cement of this invention, therefore, may be applied on a large scale like the Portland cements.

Also, The hydraulic cement according to the present invention develops the same setting time and initial hardening strength as ordinary Portland cements, and has excellent long-term strength, chemical-resistance and carbonation-resistance compared with existing Portland cements or slag-gypsum system. Moreover, though the cement of this invention is subjected to carbonation, the structure of the hardened body of the cement will not be cracked and the mechanical strength will not be deteriorated unconditionally unlike existing slag-gypsum system.
The reason is that carbonation of the cement is occured after the hydration reaction of the cement is nearly finished and the reinforcement body originated from the resultant hydrates and cementious bonding matrix is already formed.

The following table 2 shows that the characters of the cement of this invention are superior to that of the slag-gypsum system and ordinary Portland cements.

Table 2

| | | High-sulfate slag-gypsum system (BS 4,248) | Cement of the present invention | Type I-Portland cement (JIS) | Type V-Portland cement (high-sulfate) (JIS) |
|---|---|---|---|---|---|
| Com-pressive strength ($kg/cm^2$) | 3rd day | 48 | 196 | > 70 | > 50 |
| | 7th day under-water | 206 | 302 | > 150 | > 100 |
| | 7th day in the air | 164 | 277 | - | - |
| | 28th day under-water | 419 | 415 | > 240 | > 280 |
| | 28th day in the air | 224 | 410 | - | - |
| Setting time (hr-m) | initial | 43m | 2hr 8m | > 1hr | > 45m |
| | final | 4hr 6m | 6hr 16m | < 10hr | < 10hr |
| Carbonation area(%) (When curing in the air for 28 days) | | 47.9 | 19 | | |

o mortar specimen

o cement : sand = 1 : 2.45(by weight)

o water : cement = 0.55 : 1(by weight)

This invention will now be described in more detail in connection with the following examples which should be considered as being examplary and not limiting of this invention.

Example 1

70kg of granulated blast-furnace slag, 10kg of $CaSO_4.2H_2O$, 3kg of Portland clinker, and 10kg of fly ash or bottom ash from steam generating stations were finely ground without calcinating in a ball mill to obtain 93kg of a mixture thereof.

The mixture obtained was mixed with 5kg of slaked lime, 0.5kg of $Na_2SiF_6$ and 1.5kg of $MgSiF_6$ to give 100kg of the high-strength hydraulic cement having a Blaine value of 4,000cm$^2$/g.

Example 2

72kg of granulated blast-furnace slag, 8.5kg of $CaSO_4$ calcined at 750 - 950$^{o}$C, and 10kg of briquet cinders or coal cinders were finely ground without calcinating in a ball mill to obtain 90.5kg of a mixture thereof.

The mixture obtained was mixed with 4.5kg of slaked lime, 3kg of Portland cement powder and 2kg of $MgSiF_6$ or $ZnSiF_6$ to give 100kg of the high-strength hydraulic cement having a Blaine value of 3,600cm$^2$/g.

Example 3

70kg of granulated blast-furnace slag, 10kg of white $CaSO_4$ calcined at 750 - 950$^{o}$C, 3kg of white cement powder, and 10kg of white clay or white earth calcined at 950$^{o}$C were finely ground without calcinating in a ball to obtain 93kg of mixture thereof.

The mixture obtained was mixed with 5kg of slaked lime, 0.5kg of $Na_2SiF_6$ and 1.5kg of $ZnSiF_6$ to give 100kg of the high-strength hydraulic cement having a Blaine value of 4,000$cm^2/g$.

Example 4

Each kind of colored hydraulic cement was prepared in the same manner described in Example 3 except that about 0.1 - 1.5wt.% of the inorganic pigments for cements was used.

Example 5

A hydraulic cement was prepared in the same manner described in Example 1 except that 3kg of $CaSO_4$ and 7kg of $CaSO_4.2H_2O$ were used instead of 10kg of $CaSO_4.2H_2O$.

Example 6

A hydraulic cement was prepared in the same manner described in Example 2 except that about 0.2 - 0.5wt.% of water-receding dispersant for cements was used.

The invention being thus described, it will be obvious that the same may be varied in many ways. Such variations are not to be regarded as a departure from the spirit and scope of the invention, and all modifications as would be obvious to one skilled in the art are intended to be included in the scope of the following claims.

WHAT IS CLAIMED IS :

1. A high-strength hydraulic cement composition having high initial hardening strength, excellent carbonation-resistance and lengthened initial setting time, characterized in that comprises 60 - 85 wt. parts of granulated blast-furnace slag, 5.0 - 15 wt.%parts of calcium sulfate anhydrate and/or calcium sulfate dihydrate, 6.0 - 12 wt. parts of pozzolanic materials, 2.0 - 10 wt. parts of slaked lime, 1.0 - 6.0 wt. parts of Portland cement or Portland cement clinker, 1.0 - 6.0 wt. parts of metal salts of fluorosilicates and 0.1 - 0.8 wt. parts of aluminous sulfate.

2. The composition of the claim 1 wherein the pozzolanic materials are selected from the group consisting of ash clinker or fly ash from steam generating stations, briquet cinders and coal cinders.

3. The composition of the claim 1 wherein the metal salts of fluorosilicates are selected from the group consisting of $Na_2SiF_6$, $MgSiF_6$ and $ZnSiF_6$.

4. The composition of the claim 1 further including about 0.1 - 5.0 wt. parts of silica sand or silica stone and about 0.1 - 1.0 wt. parts of water-receding dispersant for cements.

5. The composition of the claim 1 wherein a Blaine value is about 2,500 - 4,600$cm^2/g$.

6. A process for producing a high-strength hydraulic cement composition having initial hardening strength, excellent carbonation-resistance and lengthened initial setting time, characterized in that comprises 60 - 85 wt. parts of granulated blast-furnace slag, 5.0 - 15 wt.% parts of calcium sulfate anhydrate and/or calcium sulfate dihydrate, 6.0 - 12 wt. parts of pozzolanic materials, 2.0 - 10 wt. parts of slaked lime, 1.0 - 6.0 wt. parts of Portland cement or Portland cement clinker, 1.0 - 6.0 wt. parts of metal salts of fluorosilicates and 0.1 - 0.8 wt. parts of aluminous sulfate,comprises only grinding and mixing together said components without carrying out a high-temperature calcinating to produce fine powder having Blaine value of about 2,500 - 4,600$cm^2/g$.

# INTERNATIONAL SEARCH REPORT 0188618

International Application No. PCT/KR84/00009

**I. CLASSIFICATION OF SUBJECT MATTER** (if several classification symbols apply, indicate all) [3]

According to International Patent Classification (IPC) or to both National Classification and IPC

Int. $Cl^4$ C04B 7/21, 22/12, 22/14, 28/08, 28/22

**II. FIELDS SEARCHED**

Minimum Documentation Searched [4]

| Classification System | Classification Symbols |
| --- | --- |
| IPC | C04B 7/14-7/21, 22/06-22/14, 28/08, 28/22 |

Documentation Searched other than Minimum Documentation to the Extent that such Documents are Included in the Fields Searched [5]

**III. DOCUMENTS CONSIDERED TO BE RELEVANT** [14]

| Category* | Citation of Document, [16] with indication, where appropriate, of the relevant passages [17] | Relevant to Claim No. [18] |
| --- | --- | --- |
| A | JP, A, 51-91933 (Sumitomo Cement Kabushiki Kaisha) 12 August 1976 (12. 08. 76) (Family nashi) | |
| A | JP, A, 53-13629 (Mitsubishi Mining & Cement Co., Ltd.) 7 February 1978 (07. 02. 78) (Family nashi) | |
| A | JP, A, 55-121938 (Nippon Steel Corp.) 19 September 1980 (19. 09. 80) (Family nashi) | |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
| --- | --- |
| March 22, 1985 (22. 03. 85) | April 1, 1985 (01. 04. 85) |
| **International Searching Authority** [1] | **Signature of Authorized Officer** [20] |
| Japanese Patent Office | |